Europäisches Patentamt

European Patent Office

Office européen des brevets

(11) Veröffentlichungsnummer: **0 371 309**
**A2**

## (12) EUROPÄISCHE PATENTANMELDUNG

(21) Anmeldenummer: 89121039.5

(22) Anmeldetag: 14.11.89

(51) Int. Cl.5: **C08J 9/00, B01J 19/12,**
**C08J 9/04, C08L 75/04,**
**//(C08L75/04,61:28)**

(30) Priorität: 28.11.88 DE 3840079

(43) Veröffentlichungstag der Anmeldung:
06.06.90 Patentblatt 90/23

(84) Benannte Vertragsstaaten:
**AT BE CH DE ES FR GB GR IT LI LU NL SE**

(71) Anmelder: **Illbruck GmbH**
**Burscheider Strasse 454**
**D-5090 Leverkusen 3(DE)**

(72) Erfinder: **Wollmann, Klaus**
**Bahnhofstrasse 14**
**D-6250 Limburg 7(DE)**
Erfinder: **Ach, Alexander, Dr.**
**Mailänder Strasse 14**
**D-6000 Frankfurt 70(DE)**
Erfinder: **Frank, Werner**
**Gerstenschlag 7**
**D-5060 Bergisch-Gladbach(DE)**

(74) Vertreter: **Müller, Enno et al**
**Rieder & Partner Corneliusstrasse 45**
**D-5600 Wuppertal 11(DE)**

(54) **Verfahren zur Herstellung von elastischen Schaumstoffen auf Polyurethan-Basis durch Mikrowellenverschäumung.**

(57) Die Erfindung betrifft ein Verfahren zur Herstellung von elastischem Schaumstoff auf Polyurethan-Basis, insbesondere zur Verwendung im KFZ-Bereich zur Schalldämmung. Um die Schaumstoffteile in möglichst wenigen Arbeitsgängen direkt in der gewünschten Form, herstellen zu können, schlägt die Erfindung vor, daß eine Mischung von mindestens einem Polyurethan-Vorkondensat, mindestens einem Melamin-Vorkondensat und weiteren Zusätzen zur Verschäumung verwendet wird.

EP 0 371 309 A2

## Verfahren zur Herstellung von elastischen Schaumstoffen auf Polyurethan-Basis durch Mikrowellenverschäumung

Die Erfindung betrifft ein Verfahren zur Herstellung von elastischem Schaumstoff mit den Merkmalen des Oberbegriffes des Anspruches 1.

Darüber hinaus betrifft die Erfindung einen elastischen Schaumstoff sowie ein schalldämmendes Verbundbauteil auf Basis dieses Schaumstoffes.

Die Schalldämmung und auch Schalldämpfung im Motorraum von Kraftfahrzeugen usw. erlangt immer größere Bedeutung, da die Lärmbelastung für die Umwelt und für die Insassen des Kraftfahrzeuges möglichst weitgehend vermindert werden soll. Die Schalldämmung wird technisch bisher vorwiegend mit Hilfe von heißgeformten Weichschaumteilen realisiert, die über Klebe- oder mechanische Fixierungstechniken an der Karosserie oder eingebauten, tragenden Kunststoffteilen befestigt werden. Schaumstoffe für die Schalldämmung im Motorraum sollen gute akustische Schalldämmungswirkung, gute mechanische Beständigkeit, ausreichende Elastizität und gutes Rückstellverhalten, niedriges Raumgewicht, Schwerentflammbarkeit, chemische Beständigkeit gegen Wasser, Öl und Benzin sowie Temperaturbeständigkeit bis 180 $^\circ$ C besitzen. Diese Bedingungen sind gleichzeitig nur schwierig zu erfüllen.

Weiter erfolgt die Herstellung der Schaumstoffteile in zahlreichen Einzelschritten, die arbeitsenergie- und zeitaufwendig sind. Insbesondere muß ein Vorschneiden oder Stanzen der Schaumstoffteile aus einem größeren Block und ein Verkleben oder eine mechanische Befestigung auf tragenden Kunststoffteilen erfolgen.

Es wird daher angestrebt, die Schaumstoffteile in möglichst wenig Arbeitsgängen direkt in der gewünschten Form herzustellen. Der Schäum- und Härtevorgang ist bei derartigen, kleinen Schaumstoffteilen aber nur schwierig zu bewerkstelligen.

Die beste Methode hierfür ist das Verschäumen unter dielektrischer Erwärmung, beispielsweise durch Mikrowellen, wie es in der DE-OS 30 11 769 beschrieben ist. Die bisher für den hier vorgesehenen Zweck zur Anwendung kommenden Monomerenmischungen sind jedoch für ein Verschäumen unter dielektrischer Erwärmung nicht geeignet.

Ausgehend von diesem Stand der Technik stellt sich daher die Erfindung die Aufgabe, einen elastischen Schaumstoff zur Verfügung zu stellen und ein Verfahren zu seiner Herstellung anzugeben, der den eingangs genannten Anforderungen genügt und auf möglichst einfache und vorteilhafte Weise herstellbar ist.

Diese Aufgabe ist durch die im Anspruch 1 angegebene Erfindung gelöst. Der elastische Schaumstoff, Weichschaumstoff, auf Polyurethan-Basis wird durch Verschäumen unter dielektrischer Erwärmung, durch Mikrowellen hergestellt. Eine Mischung von mindestens einem Polyurethan-Vorkondensat, mindestens einem Melamin-Vorkondensat und üblichen Zusätzen wird verschäumt. Als Melamin/Formaldehyd-Vorkondensat setzt man vorzugsweise ein solches ein, das durch Säure vorkondensiert wurde (wasserunlösliches Prekondensat). Geeignete Melamin-Vorkondensate sind beispielsweise die von der Fa. ACRIS Feinchemikalien-GmbH, Heidelberg, unter der Handelsbezeichnung CYMEL 303; 301 und MM 100 sowie die von der Fa. Cassella AG, Frankfurt, unter der Handelsbezeichnung MAPRENAL MF 900 und MADURIT MW 100 vertriebenen Produkte.

Das Polyurethan-Vorkondensat wird aus einem Polyisocyanat und einer Polyhydroxyverbindung hergestellt. Die Polyhydroxyverbindung besitzt vorzugsweise ein Molekulargewicht von 1000 bis 3000 und eine Hydroxylzahl von etwa 30 bis 70. Als Polyhydroxyverbindungen verwendet man vorzugsweise Polyether und insbesondere Polyester mit Hydroxylgruppen. Geeignete Polyhydroxyverbindungen sind insbesondere die von der Fa. Bayer AG, Leverkusen, unter der Handelsbezeichnung DESMOPHEN 550 U, 1900, 2000, 2200 und unter der Handelsbezeichnung BAYTHERM 4011 T und 4012 R vertriebenen Produkte. Ebenfalls geeignet sind die von der BASF AG, Ludwigshafen, unter der Handelsbezeichnung LUPRANOL 2000 sowie die von der Fa. Ernst Jäger, Düsseldorf, unter der Handelsbezeichnung JÄGERPOL HP44 vertriebenen Produkte.

Als Polyisocyanate kommen alle auf diesem Gebiet üblichen Polyisocyanate in Frage. Insbesondere geeignet sind als Polyisocyanat 2,4- und 2,6-Toluylen-diisocyanat, Naphthalin-1,5-diisocyanat, Diphenylmethan-4,4'-diisocyanat, 1,6-Hexamethylendiisocyanat, Trimethylhexamethylendiisocyanat oder Isophorondiisocyanat oder Mischungen davon.

Geeignete Polyisocyanate sind z. B. die von der Bayer AG, Leverkusen, unter der Handelsbezeichnung DESMODUR E14, E21, E22, E41, T80 und MDI vertriebenen Produkte.

Die Herstellung der Polyurethan-Vorkondensate erfolgt in üblicher Weise, so daß 25 - 75 % freie Hydroxylgruppen erhalten bleiben. Auch die Herstellung des Melaminvorkondensates erfolgt in üblicher Weise.

Zur Herstellung der erfindungsgemäßen Schaumstoffe werden Polyurethan-Vorkondensate und das Melamin-Vorkondensate vermischt und unter Zugabe verschiedener Additive verschäumt.

Derartige Additive sind geringe Mengen Wasser (1 bis 5 Gew.-%, bezogen auf das Gesamtgewicht der zu verschäumenden Mischung) als Adsorbens der elektrischen Energie und Treibmittel, Emulgatoren und Stabilisatoren. Besonders bevorzugt ist es, Eiweißfettsäurekondensate einzusetzen, weil diese sowohl als Treibmittel als auch Emulgatoren wirken. Daher kann die Menge an zuzugebendem Wasser verringert werden, so daß trotz der reaktiven Ausgangskomponenten ausreichend Zeit zur Durchmischung und Homogenisierung vor dem eigentlichen Schäumprozeß verbleibt.

Geeignete Emulgatoren sind die von der Borchers AG, Goslar, unter der Handelsbezeichnung BORCHIGEN STL und insbesondere die von der DGF Stoess & Co., Eberbach, unter der Handelsbezeichnung EFK 3000 und EFK 500 (Eiweißfettsäurekonzentrat) vertriebenen Produkte.

Geeignete Stabilisatoren sind die von der Goldschmidt AG, Essen, unter der Handelsbezeichnung TEGOSTAB B8404, BF 2370 und B 4113 vertriebenen Produkte.

Als Hilfstreibmittel ist beispielsweise Frigen 113 der Höchst AG, Frankfurt, geeignet.

Weitere übliche Additive sind Katalysatoren, wie die von der Bayer AG, Leverkusen, unter der Handelsbezeichnung DESMORAPID DP, von der Fa. Air Products, Utrecht, unter der Handelsbezeichnung DABCO LK 221 und der Texaco Chemical Co., Köln, unter der Handelsbezeichnung JEFFAMIN DU 700, ED 600 und BUD 2000 vertriebenen Produkte sowie Toluolsulfonsäure und Dibutylzinnlaurat.

Weitere geeignete Additive sind die von den Rütgers' Werken, Meidrich, unter der Handelsbezeichnung Härter SL, von der Union Carbide, Wiesbaden, unter der Handelsbzeichnung SILIKON M20 vertriebenen Produkte.

Polyurethan-Vorkondensat und Melamin-Vorkondensat können in jedem Verhältnis von 1:4 bis 10:1, vorzugsweise von 3:1 bis 10:1 Gew.-Teilen zur Anwendung. Da Eiweißfettsäurekonzentrat gibt man vorzugsweise in einer Menge von 0,1 % bis 5 % zu.

Die zum Schäumen vorgesehene Mischung liegt als Paste mit einer Viskosität von 1 bis 5000 cPas vor. Sie wird in eine entsprechende Form derart gegeben, daß der Boden der Form bedeckt ist. Das Verschäumen erfolgt in einem üblichen Mikrowellenofen, wie er beispielsweise in der DE-OS 30 11 769 beschrieben ist. Vorzugsweise führt man das Verschäumen 1 bis 5 Min. bei einer Leistung von max. 700 Watt durch. Nach Entnahme des Schaumkörpers aus dem Ofen läßt man diesen noch einige Minuten abkühlen und aushärten, vorzugsweise 1 bis 10 Min. bei 50 - 100 °C.

Die erfindungsgemäß erhältlichen Schaumstoffe besitzen folgende Eigenschaften: Sie sind feinporig, homogen, mechanisch beständig, elastisch und haben Raumgewichte 30 - 500 kg/m³. Außerdem besitzen sie Tieftemperaturflexibilität und Wärmestandfestigkeit. Aufgrund der Mitverwendung des Melaminharzes besitzen die Schaumstoffe außerdem eine hohe Flammfestigkeit. Die Stauchhärte beträgt etwa 2 - 5 kPa (40%-Wert gemäß DIN 53577), die Zugfestigkeit 150 - 200 kPa (DIn 53571) und die Bruchdehnung etwa 150 - 300%.

Die Schaumstoffe lassen sich für die Wärme- und Schalldämmung von Gebäuden und Gebäudeteilen, Behältern und dergleichen und insbesondere für die Wärme- und Schalldämmung von Fahrzeugen und Flugzeugen verwenden.

Das nachfolgende Beispiel erläutert die Erfindung:

**Beispiel**

Man stellt ein Polyurethan-Vorkondensat her, indem man 10,20 g Polyol (Desmophen 4011 T) zu 3,37 g Diisocyanat (MDI) gibt und 8 h bei Raumtemperatur rührt.

Weiter stellt man ein Melamin-Vorkondensat her, indem man 20 g Melaminharz (Cymel 303) mit 0,5 Toluolsulfonsäure 30 Min. bei 80 °C rührt.

Man vermischt 4 g des Polyurethan-Prekondensates und 10 g des Melamin-Prekondensates und versetzt mit 6 g Polyol (Desmophen 550 U), 16,5 g Polyisocyanat (Desmodur E21), 0,6 g Stabilisator (Tegostab 2370), 0,4 g Emulgator (EFK3000) und 2 g Wasser. Man gibt die Mischung in eine Form und verschäumt in einem Mikrowellenofen (700 W). Der Schaumprozeß dauert 2 Min. bei reduziertem Energieeintrag. Man entnimmt den Schaumkörper dem Ofen und läßt noch einige Minuten abkühlen und aushärten.

Der erhaltene Schaumstoff ist homogen, feinporig, elastisch und besitzt ein Raumgewicht von 100 kg/cm³.

**Ansprüche**

1. Verfahren zur Herstellung von elastischem Schaumstoff auf Polyurethan-Basis, insbesondere zur Verwendung im Kfz-Bereich zur Schalldämmung, durch Verschäumung unter dielektrischer Erwärmung, dadurch gekennzeichnet, daß eine Mischung von mindestens einem Polyurethan-Vorkondensat, mindestens einem Melamin-Vorkondensat und weiteren Zusätzen ver- schäumt wird.

2. Verfahren nach Anspruch 1, dadurch gekennzeichnet, daß ein wasserunlösliches Melamin-Formaldehyd-Vorkondensat verwendet wird.

3. Verfahren nach Anspruch 1 oder 2, dadurch gekennzeichnet, daß lineare Polyisocyanatvorkondensate mit 5 - 10 % freien Isocyanatgruppen eingesetzt werden.

4. Verfahren nach einem der vorhergehenden Ansprüche, dadurch gekennzeichnet, daß ein Polyurethan-Vorkondensat verwendet wird, das aus einer Polyhydroxyverbindung mit einem Molekulargewicht von 1000 bis 3000 und einer Hydroxylzahl von 30 bis 70 erhalten wurde.

5. Verfahren nach Anspruch 4, dadurch gekennzeichnet, daß als Polyisocyanat 2,4- und 2,6-Toluylen-diisocyanat, Naphthalin-1,5-diisocyanat, Diphenylmethan-4,4'-diisocyanat, 1,6-Hexamethylendiisocyanat, Trimethylhexamethylendiisocyanat oder Isophorondiisocyanat einzeln oder in Mischung verwendet wird.

6. Verfahren nach Anspruch 4 oder 5, dadurch gekennzeichnet, daß als Polyhydroxyverbindung ein Polyester oder Polyetherglykol verwendet wird.

7. Verfahren nach einem der vorhergehenden Ansprüche, dadurch gekennzeichnet, daß ein Eiweißfettsäurekonzentrat verwendet wird, das als Treibmittel und als Emulgator wirkt.

8. Verfahren nach einem der vorhergehenden Ansprüche, dadurch gekennzeichnet, daß das Verschäumen etwa 1 bis 20 Min. im Mikrowellenofen (Leistung max. 700 Watt) durchgeführt wird.

9. Verfahren nach einem der vorhergehenden Ansprüche, dadurch gekennzeichnet, daß etwa 1 bis 10 Min. bei 50 -100 °C nachgehärtet wird.

10. Elastische Schaumstoffe, erhältlich nach einem Verfahren gemäß einem der Ansprüche 1 bis 9.

11. Schalldämmendes Verbundbauteil, insbesondere zur Verwendung im Kfz-Bereich, bestehend aus einem Schaumstoff gemäß Anspruch 10 und einem Kunststoff-Trägerteil.